# EUROPÄISCHE PATENTSCHRIFT

(11) **EP 1 279 534 B1**
(45) Veröffentlichungstag und Bekanntmachung des Hinweises auf die Patenterteilung: **25.08.2004**
(21) Anmeldenummer: 02012870.8
(22) Anmeldetag: 11.06.2002
(51) Int. Cl.: B60H 3/00, B01D 53/86

(54) **Kraftfahrzeug mit einer Messsondeneinrichtung zur Erfassung der Gaszusammensetzung der Luft und mit einer Reduktionseinrichtung für ein Gas**
Vehicle with sensing means for determining the gas composition of the air and with a reducing system for one gas
Véhicule doté de moyens de mesure déterminant la composition gazeuse de l'air et de moyens de réduction pour un gaz

(30) Priorität: 24.07.2001 DE 10135930
(43) Veröffentlichungstag der Anmeldung: 29.01.2003
(73) Patentinhaber: Bayerische Motoren Werke Aktiengesellschaft, 80809 München (DE)
(72) Erfinder: Jeschke, Dirk, Dr., 80798 München (DE); Albiez, Robert, 85084 Reichertshofen (DE); Kuhn, Joachim, 81247 München (DE)

(56) Entgegenhaltungen:
- WO-A-96/09109
- WO-A-96/22148
- DE-A- 3 938 592
- DE-A- 4 300 780

## Beschreibung

Die Erfindung betrifft ein Kraftfahrzeug mit gesonderten Räumen für eine flüssigkeitsgekühlte Brennkraftmaschine und für Fahrzeuginsassen.

Bei Kraftfahrzeugen wird üblicherweise die Lufttemperatur sowohl für die Ansaugluft der Brennkraftmaschine als auch für die angesaugte Luft der Klima /Belüftungsanlage erfasst mittels Sensoreinrichtungen, wobei die hierbei generierten Signale von einer zentralen Steuerung verarbeitet werden.

Femer ist mit der DE 39 38 592 A1 eine Vorrichtung zur Beseitigung des Ozongehalts von Raumluft bekannt geworden. Das beschriebene geschlossene raumlufttechnische Gerät weist ein Gehäuse mit einem Ein- und einem Auslass auf, welches im Inneren eine Reaktionseinrichtung sowie Messsonden und einen eigenen Ventilator zur Erzeugung eines Luftstromes umfasst und beansprucht einen sehr großen Bauraum. Darüber hinaus weist es ein sehr hohes Gewicht auf, so dass sich auch diesbezüglich ein Einsatz vor dem Hintergrund heutiger Anforderungen nicht anbietet.

Weiterhin wird zum technologischen Hintergrund auf die WO 96/22148 A2 verwiesen, welche eine Einrichtung zum Reinigen von Umgebungsluft betrifft. Die Einrichtung dient lediglich zur ungeregelten Behandlung von Umgebungsluft und weist weder Messsonden noch eine Steuereinrichtung auf

Der Erfindung liegt die Aufgabe zugrunde, ein Kraftfahrzeug zu schaffen, dessen Betrieb in noch weiter verbesserter Weise auf die aktuellen Umgebungsbedingungen abstimmbar ist.

Diese Aufgabe wird erfindungsgemäß mit den Kennzeichenmerkmalen des Patentanspruches 1 gelöst.

Mit der Erfindung wird es auf vorteilhafte Weise möglich, insbesondere während des Stop and Go-Betriebes des Fahrzeuges, die Zusammensetzung der Umgebungsluft permanent zuverlässig zu erfassen. Der Bildung von hinsichtlich des Umgebungsluftzustand nur bedingt repräsentativen Gaszonen kann hierbei auf vorteilhafte Weise vorgebeugt werden.

Gemäß einer besonders bevorzugten Ausführungsform der Erfindung, umfasst die Meßsondeneinrichtung eine Sensoreinrichtung zur Generierung, eines hinsichtlich der Ozon- Konzentration, indikativen Meßwertes. Dadurch wird es auf vorteilhafte Weise möglich, den Betrieb der Brennkraftmaschine und/oder der Klima/Belüftungsanlage auf die momentan vorherrschende Ozon-Konzentration abzustimmen. Hierdurch ist es beispielsweise möglich, die Steuerung des Betriebes der Brennkraftmaschine des Kraftfahrzeuges derart abzustimmen, dass diese bei erhöhter Ozon-Konzentration nur ein eingeschränktes Leistungsspektrum zur Verfügung stellt. Weiterhin wird es möglich, die Belüftung des Fahrgastraumes unter Berücksichtigung der derart gewonnenen, hinsichtlich der Konzentration des Ozons indikativen Messwerte, abzustimmen.

Gemäß einer besonders bevorzugten Ausführungsform der Erfindung umfasst das Kraftfahrzeug eine Ozon-Reduktionseinrichtung zur Umwandlung von Ozon in bi-atomare Sauerstoffmoleküle. Hierdurch wird es auf vorteilhafte Weise möglich, durch das Kraftfahrzeug selbst etwaige, in den Motorraum des Fahrzeugs gelangende Ozonmoleküle umzuwandeln und hierdurch die Ozonbelastung zu senken.

Durch die erfindungsgemäße Messsondeneinrichtung wird es darüber hinaus in besonders vorteilhafter Weise möglich, eine Funktionsprüfung der Ozon-Reduktionseinrichtung durchzuführen.

Gemäß einem besonderen Aspekt der vorliegenden Erfindung, ist die Messsondeneinrichtung in einem Motor-Ansaugluftkanal angeordnet. Hierdurch wird es möglich, durch den Motor-Ansaugluftstrom eine zwangsweise Anströmung der Messsondeneinrichtung zu erreichen. Hierdurch ergibt sich, insbesondere beim Standbetrieb des Kraftfahrzeuges, eine zuverlässige Erfassung der Ozon-Konzentration der Umgebungsluft.

Alternativ zu der vorangehend genannten Maßnahme - oder in besonders vorteilhafter Weise auch in Kombination hiermit, ist es möglich, die erfindungsgemäße Messsondeneinrichtung stromabwärts eines Kühlergebläses anzuordnen. Hierdurch wird es möglich, die Ozon-Konzentration der durch das Kühlergebläse geförderten, durch einen Fahrzeug-Wärmetauscher erwärmten Umgebungsluft zu erfassen.

Die bereits genannte Ozon-Reduktionseinrichtung umfasst in vorteilhafter Weise, eine im Motorraum ausgebildete Katalysatorfläche. Hierdurch wird es möglich, die Ozon-Konzentration der in den Motorraum eintretenden Umgebungsluft zu reduzieren.

Die genannte Katalysatorfläche ist vorzugsweise unmittelbar an einer Kühlereinrichtung ausgebildet. Die Katalysatorfläche kann hierbei auf der Oberfläche eines Gebläse-Laufrades oder einer Gebläse-Aufhängungsstruktur ausgebildet sein. Eine im Hinblick auf einen besonders hohen Umwandlungs-Wirkungsgrad vorteilhafte Ausführungsform der Erfindung, ist dadurch gegeben, dass die Ozon-Reduktionsoberfläche sich auf der Oberfläche eines Kühlwasser-Wärmetauschers (Fahrzeugkühlers) befindet.

Eine im Hinblick auf eine besonders zuverlässige Funktionskontrolle der Ozon-Reduktionseinrichtung vorteilhafte Ausführungsform der Erfindung, ist dadurch gegeben, dass eine zweite Sensoreinrichtung vorgesehen ist, die ebenfalls der Erfassung der Ozon-Konzentration dient. Es ist hierbei möglich, die erste und die zweite Sensoreinrichtung derart anzuordnen, dass eine der beiden Sensoreinrichtungen die Ozon-Konzentration der Luft, vor der Ozon-Reduktionseinrichtung erfasst, wogegen die andere Sensoreinrichtung die Ozon-Konzentration der Luft nach deren In-Kontakttreten mit der Ozon-Reduktionseinrichtung erfasst. Hierdurch wird es auf besonders vorteilhafte Weise möglich, eine Funktionsüberprüfung der Ozon-Reduktionseinrichtung vorzunehmen.

Die beiden Sensoreinrichtungen sind gemäß einem besonderen Aspekt der vorliegenden Erfindung vorzugsweise zu einer Baueinheit zusammengefasst, die im Motorraum an einer Stelle angeordnet ist, an welcher ein Luftstrom mit Umgebungsluft-Ozon-Konzentration und ein Luftstrom mit bereits reduzierter Ozon-Konzentration zueinander benachbart verlaufen.

Auf Grundlage der durch die erfindungsgemäße Messsondeneinrichtung, vorzugsweise in Kombination mit thermodynamischen Zustandsgrößen der Umgebungsluft erfasste Gaszusammensetzung der Umgebungsluft, wird es möglich, sowohl den Betrieb der Brennkraftmaschine, als auch die Klimatisierung/Belüftung des Fahrzeuginnenraumes in verbesserter Weise auf die momentanen Fahrzeugbetriebsbedingungen abzustimmen.

Weitere Einzelheiten und Merkmale der Erfindung ergeben sich aus der nachfolgenden Beschreibung in Verbindung mit der Zeichnung. Es zeigen:
- **Figur 1**: eine vereinfachte Prinzipskizze zur Erläuterung eines bevorzugten Grundaufbaues einer erfindungsgemäßen Messsondeneinrichtung;
- **Figur 2**: eine Skizze zur Erläuterung einer bevorzugten Einbauposition der erfindungsgemäßen Messsondeneinrichtung.

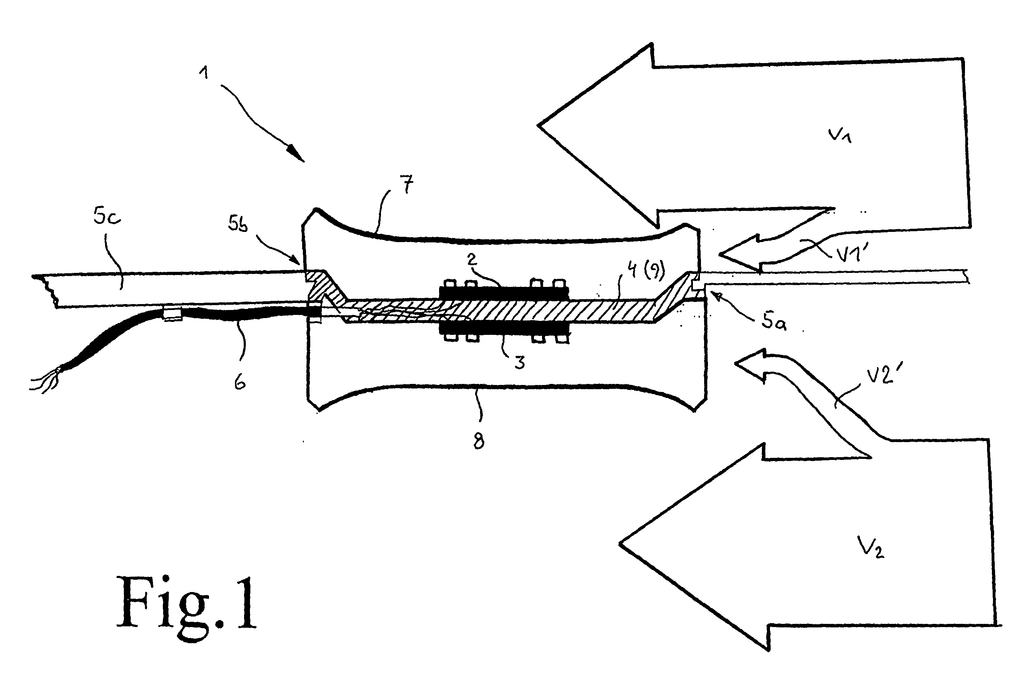

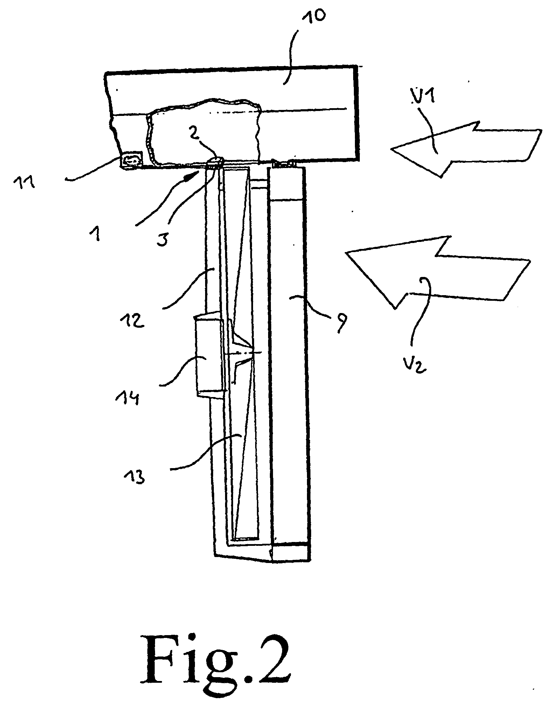

Figur 1 zeigt eine vereinfachte Schnittansicht einer Messsondeneinrichtung 1 mit einer ersten Sensoreinrichtung 2 und einer zweiten Sensoreinrichtung 3, wobei die erste Sensoreinrichtung 2 zur Erfassung der Ozon-Konzentration eines Motor-Ansaugluftstromes V1 vorgesehen ist, und die zweite Sensoreinrichtung 3 zur Erfassung der Ozon-Konzentration des aus einem Motorkühler (Figur 2 Bezugszeichen 9) abströmenden Kühler-Luftstromes V2, vorgesehen ist.

Die erste Sensoreinrichtung 2 und die zweite Sensoreinrichtung 3, sind an einer gemeinsamen Trägerstruktur 4 angeordnet, die hier aus einem Kunststoffmaterial gefertigt ist und über eine Befestigungseinrichtung 5a, 5b an einer Luftführungseinrichtung 5c anbringbar, welche von dem Motor-Ansaugluftstrom V1 durchströmt wird.

Die beiden Sensoreinrichtungen 2, 3 sind bei diesem Ausführungsbeispiel als Ozon-Sensoren ausgebildet, wobei deren Anschlusskabel 6 über eine Steckverbindereinrichtung mit einem fahrzeugseitig vorgesehenen Kabelbaumast verbindbar sind. Dies Anschlusssteckereinrichtung ist vorzugsweise integral mit der Trägerstruktur 4 ausgebildet.

In einem Abstand von ca. 4 bis 15 mm ist in dieser Ansicht oberhalb der ersten Sensoreinrichtung 2 eine Luftführungseinrichtung 7 vorgesehen, durch welche ein Teilstrom V1' des vorbeiströmenden Motor-Ansaugluftstromes V1 intensiv über die erste Sensoreinrichtung 2 geführt wird, um die Ozon-Konzentration der Ansaugluft zuverlässig zu erfassen.

Auch für die zweite Sensoreinrichtung 3 ist eine Luftführungseinrichtung 8 vorgesehen, durch welche ein Teilstrom V2' des aus einem Kühler- bzw. Fahrzeugwärmetauscher abströmenden, durch das Motorkühlwasser erwärmten und durch eine ozonreduzierende Beschichtung des Kühlers ozonreduzierten Luftstromes V2 intensiv über die zweite Sensoreinrichtung 3 geführt wird.

Die Trägerstruktur 4 der Messsondeneinrichtung 1 umfasst bei diesem Ausführungsbeispiel einen aus einem Kunststoffmaterial gefertigten Basiskörper 9, durch welchen auch eine ausreichende thermische Trennung der beiden Sensoreinrichtungen 2, 3 erreicht wird.

Die durch die beschriebene Messsondeneinrichtung 1 zentral generierten Messwerte für die Gaszusammensetzung der Motoransaugluft sowie der Gaszusammensetzung der aus dem Motorkühler abströmenden, ozonreduzierten Luft, können über einen einzigen Steckverbinder einer Steuereinrichtung, insbesondere einem elektronischen Motor-Managementsystem zur Ausführung OBD-relevanter Funktionen, zugeführt werden.

Die durch die erste Sensoreinrichtung 2 generierten, hinsichtlich der Ozon-Konzentration des Motor-Ansaugluftstromes indikativen Messsignale sowie die über die zweite Sensoreinrichtung 3 erfassten, hinsichtlich der Ozon-Konzentration der aus dem Motorkühler abströmenden Luft indikativen Signale, können zur Optimierung des Betriebs der Brennkraftmaschine sowie zur Überwachung der Ozon-Reduktions-Funktion des Kühlers herangezogen werden.

In Figur 2 ist in Form einer Prinzipskizze dargestellt, in welcher Weise die erfindungsgemäße Messsondeneinrichtung 1 bei einem Kraftfahrzeug angeordnet werden kann. Bei diesem Ausführungsbeispiel befindet sich die erste Sensoreinrichtung 2 und auch die zweite Sensoreinrichtung 3, in einem in Fahrtwindanströmrichtung gesehen, hinter einem Kühler 9 liegenden Bereich. Eine den Motoransaugluftstrom V1 führende Luftführungseinrichtung 10 ist derart nahe an einen von einem Kühlerluftstrom V2 überströmten Ort heran geführt, dass die Ozon-Konzentrationen der seitens des Motors angesaugten Luft sowie der durch den Kühler 9 geleiteten und hierbei hinsichtlich der Ozon-Konzentration veränderten Luft, im wesentlichen zentral erfasst werden können.

Die durch die erste Sensoreinrichtung 2 und die zweite Sensoreinrichtung 3 erzeugten Messsignale, können über eine Anschlusssteckereinrichtung 11 an einen fahrzeugseitig vorgesehenen Kabelbaumast weitergeleitet werden. Die Anschlusssteckereinrichtung 11 umfasst einen Koppelungsabschnitt, der integral mit der Luftführungseinrichtung 10 ausgebildet ist.

Die Luftführungseinrichtung 10 ist weiterhin mit einer Aufhängungseinrichtung 12 eines Kühlergebläses 13 verbunden. Diese Aufhängungseinrichtung 12 wiederum ist mit dem Kühler 9 gekoppelt. Es ist möglich, auch die zur Spannungsversorgung eines Motors 14 der Gebläseeinrichtung 13 vorgesehenen Leitungseinrichtungen, über den genannten Anschlussstecker 11 an das fahrzeugseitig vorgesehene Leitungssystem anzukoppeln. Hierdurch ergibt sich ein noch weiter verringerter Verkabelungsaufwand. Alternativ hierzu ist es möglich, die beiden Sensorelemente 2, 3 über Kontakteinrichtungen die in einen Gebläseanschlussstecker integriert sind, mit dem fahrzeugseitigen Leitungssystem zu koppeln. Bei dem vorangehend beschriebenen Ausführungsbeispiel ist die Sensoreinrichtung 1 an einem Strukturbauteil der Luftführungseinrichtung 10 angebracht. Die Erfindung ist jedoch nicht auf eine derartige Ausführungsform beschränkt. Beispielsweise ist es auch möglich, die Sensoreinrichtung 1 zur kombinierten Erfassung des Gaszusammensetzung der Motor-Ansaugluft sowie der durch einen Kühler 9 erwärmten Luft, an einem der Gebläseeinrichtung oder dem Kühler selbst zugeordneten Strukturbauteil anzubringen.

Es ist auch möglich, durch die erfindungsgemäß angeordnete Gasanalyseeinrichtung 1 weitere Systemparameter wie beispielsweise die Kühlwassertemperatur des Kühlers 9 zu erfassen. Eine derartige Variante ist vorzugsweise an einem dem Kühler 9 zugeordneten Strukturbauteil ausgebildet. Durch die erfindungsgemäße Lösung wird es möglich, den Fahrzeugkühler, die Gebläseeinrichtung mit deren Aufhängungseinrichtung sowie die im Fahrzeugfrontbereich liegenden Komponenten der Ansaugluftführungseinrichtung 10 als eine, mit den erforderlichen Sensoreinrichtungen bestückte, vormontierte Baueinheit auszubilden, die im Rahmen eines automatisierten Montagevorgangs auf vorteilhafte Weise montiert werden kann. Es ist möglich, die Anschlusssteckereinrichtung 11 derart auszubilden, dass diese im Rahmen des Einsetzens der genannten Baueinheit in das Fahrzeug selbsttätig mit den fahrzeugseitig vorgesehenen Anschlusskomponenten in Eingriff gelangt.

Die von der Messsondeneinrichtung 1 zur Steuerung einer Brennkraftmaschine ermittelten Messwerte können in vorteilhaft einfacher Weise auch zur Steuerung einer Klima-/Belüftungsanlage dienen. Bei einer weiteren Ausbildung kann die die Ozon-Konzentration erfassende erste Sensoreinrichtung 2 gesondert in einem Luft-Ansaugkanal einer nicht gezeigten Klima-/Belüftungsanlage angeordnet sein.

Die Erfindung ermöglicht in vorteilhafter Weise das Einleiten von Maßnahmen zum Schutz der Insassen vor bestimmten Gaskomponenten einerseits und die Bestimmung von thermodynamischen Größen der Ansaugluft als Eingangsgrößen für die Motorsteuerung, wobei in beiden Fällen als wesentliche Basis eine Diagnose chemischer Reaktionen der Außenluft in einem Kühler der Brennkraftmaschine dient.

Neben Einsparungen an Kosten, Gewicht und Raumbedarf ist neben einer Verbesserung des Motorwirkungsgrades eine OBD-relevante Kühlerdiagnose möglich. Weiter ist eine Integration des AOC-Sensors für eine Klimaautomatik darstellbar.

## Patentansprüche

1. Kraftfahrzeug mit gesonderten Räumen für eine flüssigkeitsgekühlte Brennkraftmaschine und für Fahrzeuginsassen,mit einer Messsondeneinrichtung (1) zur Erfassung der Gaszusammensetzung der dieser Messsondeneinrichtung (1) zugeleiteten Luft für eine Brennkraftmaschine und/oder eine Klima-/Belüftungsanlage, wobei die Messondeneinrichtung (1) mit einer Reduktionseinrichtung für ein vorbestimmtes Gas kombiniert ist, **dadurch gekennzeichnet, daß** die Messondeneinrichtung (1) derart im/am Kraftfahrzeug angeordnet ist, dass die Messsondeneinrichtung (1) im Standbetrieb des Fahrzeuges zwangsweise angeströmt ist.

2. Kraftfahrzeug nach Anspruch 1, **dadurch gekennzeichnet, dass** die Messsondeneinrichtung (1) eine Sensoreinrichtung (2, 3) aufweist, zur Generierung eines hinsichtlich der Ozon-Konzentration in der Umgebungsluft indikativen Messwertes.

3. Kraftfahrzeug nach Anspruch 1 oder 2, **dadurch gekennzeichnet, dass** das Kraftfahrzeug eine Ozon-Reduktionseinrichtung umfasst, zur Umwandlung von Ozon in bi-atomare Sauerstoffmoleküle.

4. Kraftfahrzeug nach wenigstens einem der Ansprüche 1 bis 3, **dadurch gekennzeichnet, dass** die Sensoreinrichtung (2) in einem Motor-Ansaugluftkanal angeordnet ist.

5. Kraftfahrzeug nach wenigstens einem der Ansprüche 1 bis 4, **dadurch gekennzeichnet, dass** die Sensoreinrichtung (3) stromabwärts eines Kühlergebläses angeordnet ist.

6. Kraftfahrzeug nach wenigstens einem der Ansprüche 1 bis 5, **dadurch gekennzeichnet, dass** die Ozon-Reduktionseinrichtung eine im Motorraum befindliche Katalysatorfläche umfasst.

7. Kraftfahrzeug nach wenigstens einem der Ansprüche 1 bis 6, **dadurch gekennzeichnet, dass** die Katalysatorfläche an einer Kühlereinrichtung ausgebildet ist.

8. Kraftfahrzeug nach wenigstens einem der Ansprüche 1 bis 7, **dadurch gekennzeichnet, dass** die Katalysatorfläche durch ein Kühlergebläselaufrad oder eine Gebläse-Aufhängungsstruktur gebildet ist.

9. Kraftfahrzeug nach wenigstens einem der Ansprüche 1 bis 8 , **dadurch gekennzeichnet, dass** eine zweite Sensoreinrichtung (3) vorgesehen ist, ebenfalls zur Erfassung der Ozon-Konzentration in einem, an die zweite Sensoreinrichtung (3) herangeführten Luftstrom.

10. Kraftfahrzeug nach wenigstens einem der Ansprüche 1 bis 9, **dadurch gekennzeichnet, dass** eine der beiden Sensoreinrichtungen (2) die Ozon-Konzentration der Luft vor der Ozon-Reduktioneinrichtung erfasst.

11. Kraftfahrzeug nach wenigstens einem der Ansprüche 1 bis 10, **dadurch gekennzeichnet, dass** eine der beiden Sensoreinrichtungen (3) die Ozon-Konzentration nach der Ozon-Reduktionseinrichtung erfasst.

12. Kraftfahrzeug nach wenigstens einem der Ansprüche 1 bis 11, **dadurch gekennzeichnet, dass** die beiden Sensoreinrichtungen (2, 3) zu einer Baueinheit zusammengefasst sind und im/am Kraftfahrzeug an einer Stelle angeordnet sind, an welcher ein Luftstrom mit Umgebungsluft-Ozon-Konzentration und ein, durch die Ozon-Reduktionseinrichtung behandelter Luftstrom, zueinander benachbart verlaufen.

## Claims

1. A motor vehicle with separate compartments for the occupants and for a liquid-cooled internal combustion engine, comprising a measuring probe device (1) for detecting the composition of the air for an engine and/or an air-conditioning and ventilation plant and supplied to the measuring probe device (1), wherein the device (1) is combined with a reduction device for a predetermined gas, **characterised in that** the device (1) is so disposed in or on the vehicle that the device (1) is automatically in a flow of oncoming air when the vehicle is stationary.

2. A vehicle according to claim 1, **characterised in that** the device (1) comprises a sensor device (2, 3) for generating a measured value indicating the concentration of ozone in the ambient air.

3. A vehicle according to claim 1 or claim 2, **characterised in that** the vehicle comprises an ozone reduction device for converting ozone into bi-atomic oxygen molecules.

4. A vehicle according to at least one of claims 1 to 3, **characterised in that** the sensor device (2) is disposed in an engine intake air duct.

5. A vehicle according to at least one of claims 1 to 4, **characterised in that** the sensor device (3) is disposed downstream of a radiator fan.

6. A vehicle according to at least one of claims 1 to 5, **characterised in that** the ozone reduction device comprises a catalyst surface in the engine space.

7. A vehicle according to at least one of claims 1 to 6, **characterised in that** the catalyst surface is formed on a fan device.

8. A vehicle according to at least one of claims 1 to 7, **characterised in that** the catalyst surface is in the form of a radiator fan impeller or a fan-suspending structure.

9. A vehicle according to at least one of claims 1 to 8, **characterised in that** a second sensor device (3) is provided, likewise for determining the concentration of ozone in an air stream supplied to the second sensor device (3).

10. A vehicle according to at least one of claims 1 to 9, **characterised in that** one of the two sensor devices (2) detects the concentration of ozone in the air before the ozone reduction device.

11. A vehicle according to at least one of claims 1 to 10, **characterised in that** one of the two sensor devices (3) detects the concentration of ozone after the ozone reduction device.

12. A vehicle according to at least one of claims 1 to 11, **characterised in that** the two sensor devices (2, 3) are combined in a structural unit and are disposed in or on the vehicle at a place where an air stream having the same concentration of ozone as the ambient air flows alongside an air stream processed by the ozone reduction device.

## Revendications

1. Véhicule automobile présentant des espaces distincts pour un moteur à combustion interne refroidi par liquide et pour les occupants du véhicule, comprenant un dispositif de sonde de mesure (1) destiné à détecter pour un moteur à combustion interne et/ou une installation de climatisation/aération, la composition gazeuse de l'air envoyé à ce dispositif de sonde de mesure (1), le dispositif de sonde de mesure (1) étant combiné avec un dispositif de réduction pour un gaz prédéterminé,
**caractérisé en ce que**
le dispositif de sonde de mesure (1) est disposé dans le véhicule automobile ou y est fixé de telle manière qu'un flux soit amené au dispositif de sonde de mesure (1) en écoulement forcé dans l'état de fonctionnement du véhicule.

2. Véhicule automobile selon la revendication 1,
**caractérisé en ce que**
le dispositif de sonde de mesure (1) comprend un dispositif détecteur (2, 3) pour la génération d'une valeur de mesure indicative de la concentration d'ozone dans l'air ambiant.

3. Véhicule automobile selon la revendication 1 ou 2,
**caractérisé en ce que**
le véhicule automobile comprend un dispositif de réduction de l'ozone pour la conversion de l'ozone en molécules d'oxygène biatomiques.

4. Véhicule automobile selon au moins une des revendications 1 à 3,
**caractérisé en ce que**
le dispositif détecteur (2) est disposé dans un conduit d'air d'aspiration du moteur.

5. °) Véhicule automobile selon au moins une des revendications 1 à 4,
**caractérisé en ce que**
le dispositif détecteur (3) est disposé en aval d'un ventilateur de radiateur.

6. Véhicule automobile selon au moins une des revendications 1 à 5,
**caractérisé en ce que**
le dispositif de réduction de l'ozone comprend une surface de catalyseur qui se trouve dans l'espace moteur.

7. Véhicule automobile selon au moins une des revendications 1 à 6,
**caractérisé en ce que**
la surface de catalyseur est formée sur un dispositif de radiateur.

8. Véhicule automobile selon au moins une des revendications 1 à 7,
**caractérisé en ce que**
la surface de catalyseur est formée par une roue de ventilateur de radiateur ou par une structure de suspension de radiateur.

9. Véhicule automobile selon au moins une des revendications 1 à 8,
**caractérisé en ce qu'**
il est prévu un deuxième dispositif détecteur (3), également pour la détection de la concentration d'ozone dans un flux d'air qui est envoyé au deuxième dispositif détecteur (3).

10. Véhicule automobile selon au moins une des revendications 1 à 9,
**caractérisé en ce qu'**
un des deux dispositifs détecteurs (2) détecte la concentration d'ozone de l'air en amont du dispositif de réduction de l'ozone.

11. °) Véhicule automobile selon au moins une des revendications 1 à 10,
**caractérisé en ce qu'**
un des deux dispositifs détecteurs (3) détecte la concentration d'ozone en aval du dispositif de réduction de l'ozone.

12. Véhicule automobile selon au moins une des revendications 1 à 11,
**caractérisé en ce que**
les deux dispositifs détecteurs (2, 3) sont regroupés en une unité et disposés dans le véhicule automobile ou fixés à ce dernier en un endroit où un flux d'air possédant la concentration d'ozone de l'air ambiant et un flux d'air traité par le dispositif de réduction de l'ozone circulent l'un dans le voisinage de l'autre.
